# EUROPEAN PATENT SPECIFICATION

(11) **EP 1 915 558 B1**
(45) Date of publication and mention of the grant of the patent: **11.08.2021**
(21) Application number: 06743527.1
(22) Date of filing: 17.05.2006
(51) Int. Cl.: G05G 9/047, F15B 13/042, F16K 7/06, F16K 11/16

(54) **VALVE CONSTRUCTION**
VENTILKONSTRUKTION
CONSTRUCTION DE SOUPAPE

(30) Priority: 17.05.2005 FI 20050525
(43) Date of publication of application: 30.04.2008
(73) Proprietor: Pimatic Oy, 32700 Huittinen (FI)
(72) Inventor: ROPPONEN, Vesa, FI-31900 Punkalaidun (FI)
(74) Representative: Kolster Oy Ab
(86) International application number: PCT/FI2006/000159
(87) International publication number: WO 2006/123012

(56) References cited:
- EP-A1- 1 462 408
- DE-A1- 2 639 486
- DE-A1- 19 949 802
- GB-A- 1 104 264
- GB-A- 2 065 272
- GB-A- 2 101 721
- JP-A- 62 274 178
- JP-A- 62 274 178
- US-A- 4 590 454
- US-A- 5 042 314

## Description

The invention relates to a valve construction according to claim 1.

Previously known are valve constructions, which in the frame have valve houses, including the valve, intended for the medium, and these valves are steered into connection by means of the control lever fitted into the frame. The control lever has an impact direct into the frame and moves the valve stem inside the frame. In these control levers also electric switches are known, whereby their electric cabling is carried out from the control lever upper end some distance along the hollow control lever towards the valve frame and then the cable is taken out from the lever before the valve frame.

As an example of previous construction a publication EP 1462408 can be presented. Said publication discloses a valve construction comprising a frame, which has one or more closing canal systems arranged to work as valve for pressurized medium, a joystick operating lever to close and open said canal systems and one or more electric operating switches fitted in connection with the joystick operating lever, whereby to the electric operating switch connected to the joystick operating lever a cable is led or a piping system fitted to run inside the joystick operating lever having tube construction for leading cable inside it. After said tube construction the cable is led out from the valve frame. DE-publication 26 39 486 A1 discloses another example of previous construction. The disadvantaged of such a solution is that the cable gets out quite close to the hand grip point, whereby it is in a spot sensitive to damage. Further, during operation, there will be a bending spot also into the cable about in the above mentioned spot, which increases the possibility of cable damage. For instance the cable coming out from the lever cannot even otherwise, be shielded beside the seat in the vehicle cabin from unintentional tear.

By means of the valve construction according to the invention the above described disadvantages are avoided.

The advantage of the invention is that the control lever becomes a, reliable handle, by means of which only turning motions are made, and the electric or pneumatic operating switches are in a known way in the upper end of the lever handle, for instance as push buttons, whereby they are easily feasible. The control lever including its handle portions and possible tubes is on the valve frame without any visible cabling. The position of the valve houses in the valve frame in relation to the control lever position can be easily so arranged that a free route is left for the cable or piping system through the valve frame. The tube inlets and outlets and a cable outlet in the valve frame are fitted on the same side of the valve frame.

In the following the invention is presented with reference to the enclosed drawing, where
Figure 1 shows the valve construction viewed from the front and the side.
Figure 2 shows the valve construction cut from the front and the side.
Figure 3 shows the valve construction viewed from the under side.
Figure 4 shows the valve construction cut from the front.

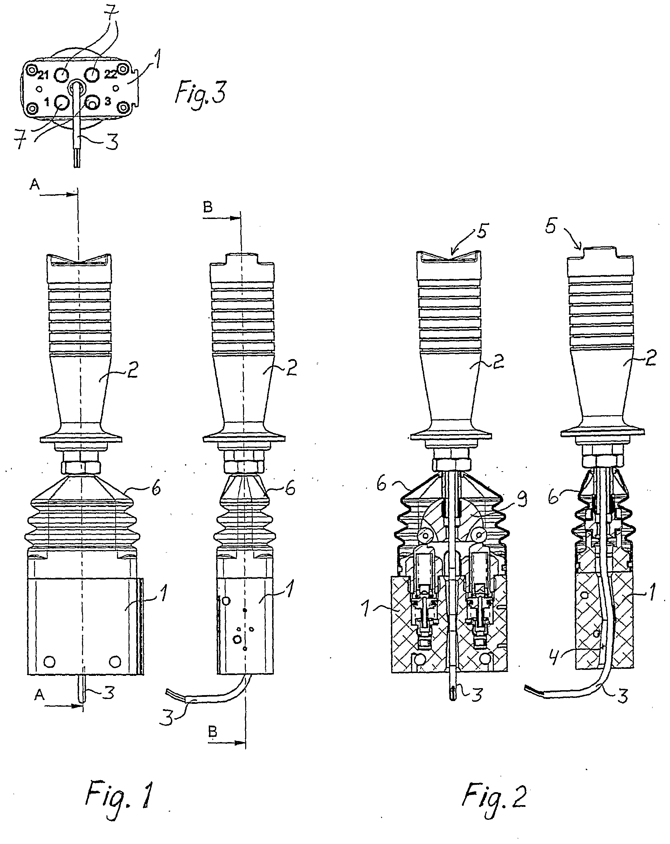

Figure 1 presents one valve frame 1 meant for compressed air and to which a turning control lever 2 is connected. Between them there is a folded rubber cover 6. There is in the upper part of lever portion 2, which is formed into a handle, a fitting 5 for connection of electric and pneumatic operating switches on top or on the side of the handle in a manner known per se. Figure 2 presents as sectional views a corresponding valve, from which channel 4 fitted inside the valve frame for cable 3 can be observed. Control lever 2 and the handle are hollow and likewise the extension tube of control lever 2, which inside the folded rubber portion 6 to reaches rocker joint 9 portion.

Figure 3 shows the bottom of the valve frame 1 in illustrated from the under side of the construction. There is in the bottom the outlet channel of cable 3 and four inlets/outlets 7 for compressed air, one coming, two going and one removing.

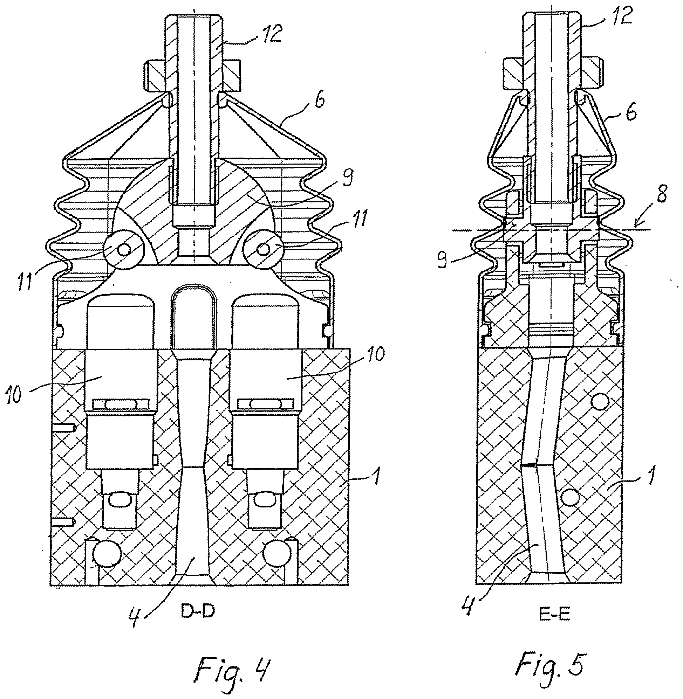

Figures 4 and 5 are shown to illustrate more exactly the feed-through of cable 3 from the control lever hollow tube 12 out through valve frame 1. There is in valve frame 1 two valve houses 10, which include the valve stems and shut-off parts (not shown), for closing and opening of the air-pressure duct led through house 10. Rocker joint part 9 above houses 10 is winding around lever 2 and tube 12 due to turning the motions. Rocker joint part 9 winds around shaft 8 (figure 5). Rocker joint part 9 presses a roller 11 downwards, whereby to the valve stem part an opening or closing motion is transmitted. Rocker joint part 9 has an open centre, in other words it is furnished with a hole, out of which cable 3 is led to channel 4 between valve houses 10 and out from it. On use the cable gets a little bent after rocker joint part 9, but this place is sheltered from other stresses.

The valve construction can have several valve houses 10 for different mediums, even several levers with a cable feed-through according to the invention. The formatting of lever 2 is not restricted and it can even be of same material as far as rocker joint 9. If the lever switch is pneumatic, usually several air pipes are led through hollow lever 2 and through its hollow handle to the valve and through its frame.

## Claims

1. A valve construction comprising a frame (1), the frame (1) comprising a plurality of closing canal systems arranged to work as a valve for pressurized medium, said canal systems comprising tube inlets and outlets (7), valve houses (10), which include valve stems and shut-off parts, the frame further comprising a channel (4) disposed in the space between the valve houses (10) in the valve frame (1), whereby the valve construction further comprises a control lever (2) to close and open said canal systems and one or more electric or pneumatic operating switches fitted in connection with the control lever (2), whereby either to the one or more electric operating switches connected to the control lever a cable (3) is led to run inside a tube (12) of the control lever (2) or to the one or more pneumatic operating switches a piping system is fitted to run inside the tube (12) of the control lever (2), whereby the cable (3) or the piping system is fitted to run further into the valve frame (1) and through the valve frame (1), the valve construction further comprising a rocker joint part (9), which is furnished with a hole and which transmits the opening and closing motion to the valve stems of the valve houses (10) by pressing downwards respective rollers (11) and wherein the cable (3) or the piping system passes through the hole of the rocker joint part (9) and the channel (4) in the valve frame (1), wherein the necessary tube inlets and outlets (7) and a cable (3) outlet are on the same bottom side of the valve frame (1).

2. A valve construction according to claim 1, **characterized in that** the control lever (2) and its tube (12) are tubular, whereby the rocker joint part (9) connected to the control lever (2) is fitted outside the tube (12).

3. A valve construction according to claim 1, **characterized in that** the cable (3) or the piping system of the one or more pneumatic operating switches is fitted to run through the frame essentially in the direction of the control lever (2) and its tube (12), when the control lever (2) is in operating position.

## Patentansprüche

1. Ventilkonstruktion, die einen Rahmen (1) umfasst, wobei der Rahmen (1) eine Vielzahl von Verschlusskanalsystemen umfasst, die angeordnet sind, als ein Ventil für ein unter Druck stehendes Medium zu fungieren, wobei die Kanalsysteme Rohreinlässe und -auslässe (7), Ventilgehäuse (10), die Ventilschäfte und Verschlussteile beinhalten, umfassen, wobei der Rahmen ferner eine Durchführung (4) umfasst, die im Raum zwischen den Ventilgehäusen (10) im Ventilrahmen (1) angeordnet ist, wodurch die Ventilkonstruktion ferner einen Steuerhebel (2) zum Schließen und Öffnen der Kanalsysteme und einen oder mehrere elektrisch oder pneumatisch betätigte Schalter, die in Verbindung mit dem Steuerhebel (2) montiert sind, umfasst, wodurch entweder zu dem einen oder den mehreren elektrisch betätigten Schaltern, die mit dem Steuerhebel verbunden sind, ein Kabel (3) geführt ist, derart, dass es in einem Rohr (12) des Steuerhebels (2) verläuft, oder zu dem einen oder den mehreren pneumatisch betätigten Schaltern ein Leitungssystem montiert ist, derart, dass es im Rohr (12) des Steuerhebels (2) verläuft, wodurch das Kabel (3) oder das Leitungssystem derart montiert ist, dass es ferner in den Ventilrahmen (1) und durch den Ventilrahmen (1) verläuft,
wobei die Ventilkonstruktion ferner ein Kippgelenkteil (9), das mit einem Loch versehen ist und das die Öffnungs- und Schließbewegung der Ventilschäfte der Ventilgehäuse (10) durch Herunterdrücken von jeweiligen Rollen (11) überträgt, und wobei das Kabel (3) oder das Leitungssystem durch das Loch des Kippgelenkteils (9) und die Durchführung (4) im Ventilrahmen (1) geleitet wird, wobei sich die erforderlichen Rohreinlässe und -auslässe (7) und ein Kabel(3)-Auslass auf derselben Unterseite des Ventilrahmens (1) befinden.

2. Ventilkonstruktion nach Anspruch 1, **dadurch gekennzeichnet, dass** der Steuerhebel (2) und sein Rohr (12) rohrförmig sind, wodurch das Kippgelenkteil (9), das mit dem Steuerhebel (2) verbunden ist, außerhalb des Rohres (12) montiert ist.

3. Ventilkonstruktion nach Anspruch 1, **dadurch gekennzeichnet, dass** das Kabel (3) oder das Leitungssystem des einen oder der mehreren pneumatisch betätigten Schalter derart montiert ist, dass es im Wesentlichen in die Richtung des Steuerhebels (2) und seines Rohres (12) durch den Rahmen verläuft, wenn sich der Steuerhebel (2) in einer Betriebsposition befindet.

## Revendications

1. Construction de soupape comprenant un bâti (1), le bâti (1) comprenant une pluralité de systèmes de canal de fermeture agencés pour fonctionner comme une soupape pour un milieu sous pression, lesdits systèmes de canal comprenant des entrées et des sorties (7) de tube, des boîtiers de soupape (10) qui comprennent des tiges de soupape et des parties de fermeture, le bâti comprenant en outre un canal (4) disposé dans l'espace entre les boîtiers de soupape (10) dans le bâti de soupape (1), moyennant quoi la construction de soupape comprend en outre un levier de commande (2) pour fermer et ouvrir lesdits systèmes de canal et un ou plusieurs commutateurs opérationnels électriques ou pneumatiques montés conjointement avec le levier de commande (2), moyennant quoi un câble (3) est amené aux un ou plusieurs commutateurs opérationnels électriques raccordés au levier de commande, pour s'étendre à l'intérieur d'un tube (12) du levier de commande (2) ou bien un système de tuyau est monté sur les un ou plusieurs commutateurs opérationnels pneumatiques, pour s'étendre à l'intérieur du tube (12) du levier de commande (2), moyennant quoi le câble (3) ou le système de tuyau est monté pour s'étendre davantage dans le bâti de soupape (1) et à travers le bâti de soupape (1),
la construction de soupape comprenant en outre une partie de joint de culbuteur (9) qui est dotée d'un trou et qui transmet le mouvement d'ouverture et de fermeture aux tiges de soupape des boîtiers de soupape (10) en comprimant des rouleaux (11) respectifs et dans laquelle le câble (3) ou le système de tuyau passe à travers le trou de la partie de joint de culbuteur (9) et le canal (4) dans le bâti de soupape (1), dans laquelle les entrées et sorties (7) de tube nécessaires et une sortie de câble (3) sont sur le même côté inférieur du bâti de soupape (1).

2. Construction de soupape selon la revendication 1, **caractérisée en ce que** le levier de commande (2) et son tube (12) sont tubulaires, moyennant quoi la partie de joint de culbuteur (9) raccordée au levier de commande (2) est montée à l'extérieur du tube (12).

3. Construction de soupape selon la revendication 1, **caractérisée en ce que** le câble (3) ou le système de tuyau des un ou plusieurs commutateurs opérationnels pneumatiques est monté pour s'étendre à travers du bâti essentiellement dans la direction du levier de commande (2) et de son tube (12) lorsque le levier de commande (2) est en position opérationnelle.
